# EUROPEAN PATENT SPECIFICATION

(11) **EP 2 989 067 B1**
(45) Date of publication and mention of the grant of the patent: **24.10.2018**
(21) Application number: 14787406.9
(22) Date of filing: 25.04.2014
(51) Int. Cl.: C04B 37/02, C04B 35/74, B22F 7/08

(54) **METAL-CERAMIC COMPOSITE AND METHOD OF PREPARING THE SAME**
METALL-KERAMIK-VERBUNDSTOFF UND VERFAHREN ZUR HERSTELLUNG DAVON
COMPOSITE MÉTAL-CÉRAMIQUE ET SON PROCÉDÉ DE PRÉPARATION

(30) Priority: 27.04.2013 CN 201310150777
(43) Date of publication of application: 02.03.2016
(73) Proprietor: BYD Company Limited, Shenzhen 518118 (CN)
(72) Inventor: GONG, Qing, Shenzhen Guangdong 518118 (CN); LIN, Xinping, Shenzhen Guangdong 518118 (CN); LIN, Yongzhao, Shenzhen Guangdong 518118 (CN); ZHANG, Faliang, Shenzhen Guangdong 518118 (CN); CHEN, Jianxin, Shenzhen Guangdong 518118 (CN); XU, Shurong, Shenzhen Guangdong 518118 (CN)
(74) Representative: Gulde & Partner
(86) International application number: PCT/CN2014/076235
(87) International publication number: WO 2014/173321

(56) References cited:
- CN-A- 101 631 883
- CN-A- 101 709 421
- CN-A- 102 233 702
- CN-A- 102 430 745
- CN-A- 102 633 488
- CN-A- 102 717 052
- CN-A- 102 950 834
- JP-A- S59 227 788
- US-A- 4 885 130
- US-A- 5 616 421
- US-A1- 2008 206 585
- US-A1- 2012 087 457
- US-B1- 7 628 942

## Description

### FIELD

The present disclosure generally relates to a method of preparing a ceramic substrate having a groove formed in a surface, wherein the groove is filled with a metal-ceramic composite and ceramic a substrate produced by the method.

### BACKGROUND

Metal-ceramic composites are widely used in fields, such as metallurgy, construction materials, mine, fireproofing material and electric power. The metal-ceramic composite acts as a wear resistant part, such as roller shell, lining board, grinding ring or grinding disk, in various breakers and grinders. Therefore, it requires the metal-ceramic composite to obtain rather high wear resistance.

Methods for preparing the metal-ceramic composite include powder metallurgy, spraying co-deposition, stirring-mixing, extruding and casting, in-situ reaction and so on. However, these methods need complicated steps and high in cost. In addition, it is hard to control the location and volume percentage of the ceramic in the metal-ceramic composite, and the distribution of the ceramic is non-uniform. Still worse, air pores may generate inside the metal-ceramic composite, which may have a very bad influence on the appearance of the metal-ceramic composite. In this case, the metal-ceramic composite may be not suitable for manufacturing exterior parts. In addition, a conventional metal-ceramic composite may have very thin metal layer which has very poor binding force with the ceramic. Then the prepared metal-ceramic composite is easy to wear and limited in application.

### SUMMARY

Embodiments of the present disclosure seek to solve at least one of the problems existing in the prior art to at least some extent, or to provide a consumer with a useful alternative.

According to the present invention there is provided a method of preparing a ceramic substrate having a groove formed in a surface, wherein the groove being filled with a metal-ceramic composite. The method comprises the steps of:
providing a ceramic substrate having a groove formed in a surface thereof, wherein the ceramic substrate includes zirconium oxide,
filling a component A into the groove, wherein component A includes at least one selected from a group consisting of W, Mo, Ni, Cr, stainless steel, WC, TiC, SiC, ZrC and ZrO₂, and
forming a reinforced phase matrix having a plurality of pores therein and dispersed in the groove by sintering the ceramic substrate filled with component A, wherein the reinforced phase matrix has a porosity of 70% to 30%;
filling a liquid melt of a Zr based alloy into the pores of the reinforced phase matrix thereby forming the metal-ceramic composite, wherein
   based on the total volume of the formed metal-ceramic composite, the content of component A is 30% to 70% by volume.

According to another aspect of the invention, a metal ceramic composite, as defined by the subject-matter of claim 9, is provided.

According to embodiments of the present disclosure, the binding force between the metal containing part (i.e. the metallic composite) and the ceramic containing part (i.e. the ceramic substrate) may be improved. Further, seamless connection may be achieved between the metallic composite and the ceramic substrate by the method according to embodiments of the present disclosure. Then the metal-ceramic composite prepared according to embodiments of the present disclosure may have improved hardness, corrosion resistance and wear resistance. In addition, the metal-ceramic composite prepared according to embodiments of the present disclosure may obtain aesthetic appearance, because very few or even no air pores (or holes) or bulky parts are contained in the metal-ceramic composite. Therefore, the metal-ceramic composite prepared according to embodiments of the present disclosure may be suitable for manufacturing exterior decorating parts, which are capable to realize effects of complete mirror surface, ceramic mirror surface and matte metal surface.

In addition, the method according to the present disclosure is easy to operate and to realize large-scale production, and has a high yield and low cost.

Additional aspects and advantages of embodiments of present disclosure will be given in part in the following descriptions, become apparent in part from the following descriptions, or be learned from the practice of the embodiments of the present disclosure.

### DETAILED DESCRIPTION

Reference will be made in detail to embodiments of the present disclosure. The embodiments described herein are explanatory, illustrative, and used to generally understand the present disclosure. The embodiments shall not be construed to limit the present disclosure.

In the specification, terms such as "first" and "second" are used herein for purposes of description and are not intended to indicate or imply relative importance or significance.

For the purpose of the present description and of the following claims, the definitions of the numerical ranges always include the extremes unless otherwise specified.

According to embodiments of a first aspect of the present disclosure, a metal-ceramic composite is provided. The metal-ceramic composite includes: a ceramic substrate having a groove formed in a surface of the ceramic substrate; and a metallic composite filled in the groove. The metallic composite includes a Zr based alloy-A composite. A includes at least one selected from a group consisting of W, Mo, Ni, Cr, stainless steel, WC, TiC, Sic, ZrC and ZrO₂. Based on the total volume of the Zr based alloy-A composite, the content of A is 30% to 70% by volume.

The inventors has surprisingly found that, a binding force between the metallic composite and the ceramic substrate may be very high, even the seamless binding between the metallic composite and the ceramic substrate may be achieved. According to some embodiments, the binding force may be greater than 50 MPa (shear strength). The Zr based alloy is filled into the pores of the reinforced phase matrix, which may be used as adhesives for not only connecting particles of the reinforced phase matrix together but also connecting the metallic composite with the ceramic substrate. Therefore, the bond strength between the metallic composite and the ceramic substrate may be higher, for example, than that between a conventional composite having only Zr based alloy and ceramic substrate bond with each other.

Also, the metal-ceramic composite may have improved hardness and strength. In some embodiments, the hardness of the metal-ceramic composite may be higher than 500 Hv.

The applicant has also found that, the metal-ceramic composite may have good wear resistance and good corrosion resistance. The Zr based alloy-A composite contains 30% to 70% by volume of A which forms the reinforcing phase matrix in the metal-ceramic composite, therefore the wear resistance of the metal-ceramic composite may be greatly improved.

The applicant has further found that, the metal-ceramic composite may have aesthetic appearance. With the present of the reinforced phase matrix, no bulky points will present in the Zr based alloy. In some embodiments, after being subjected to a neutral salt-spray test, no air holes or pores are formed in the metal-ceramic composite. In addition, a ceramic mirror surface and a metal matte surface may be achieved by using the present metal-ceramic composite. In this way, the metal-ceramic composite may be applied in wider fields, for example, as the metal-decorating exterior parts.

Furthermore, A, which includes at least one selected from a group consisting of W, Mo, Ni, Cr, stainless steel, WC, TiC, Sic, ZrC and ZrO₂, has a high melting point. For example, the melting point of W is about 3410 Celsius degrees, and the melting point of Mo is about 2610 Celsius degrees, both of them are higher than the melting point of Zr based alloy, which is about 800 Celsius degrees to about 900 Celsius degrees. Metals such as W and Mo may have a good wettability to a Zr based alloy melt, therefore the Zr based alloy melt may completely infiltrate into pores of the reinforced phase matrix in a shorted time. In addition, metals such as W and Mo have a low solubility in the Zr based alloy melt, therefore phases of the alloy will not be influenced.

Further, melting points of WC, TiC, SiC and ZrC are much higher than that of the Zr based alloy. And the inventors have found that a zirconium carbide may be formed by a reaction between element C in WC, TiC, SiC and ZrC and element Zr in the Zr based alloy. This reaction may take place on an interface of particles of A and melt of the Zr based alloy liquid. Therefore, A may have a better wettability to Zr based alloy liquid. Then the Zr based alloy melt may infiltrate into pores of the reinforced phase matrix more completely. Also, binding force between A and the Zr based alloy is improved, thus performances of the metal-ceramic composite may be optimized.

In some embodiments of the present disclosure, the groove formed in the surface of the ceramic substrate may form a pattern. The pattern may be pre-designed so as to obtain a circuit depending on practical requirement. The groove may be filled with the metallic composite. Then the color and gloss of a part of the ceramic substrate may be replaced by that of the metallic composite. Therefore a complete or partial ceramic mirror surface and a metallic matte surface may be achieved. The metal-ceramic composite may have aesthetic appearance, which may be suitable for manufacturing ceramic particles having a metal pattern and capable of exhibiting mirror effect or matte effect.

In some embodiments, the Zr based alloy-A composite includes a reinforced phase matrix having a plurality of pores, and a Zr based alloy filled in the pores. The reinforced phase matrix includes A. In an embodiment, the reinforced phase matrix is made by A.

In one embodiment, A is in form of particles, and the particle has a particle diameter of 0.1 microns to 100 microns.

In some embodiments of the present disclosure, there are no particular limitations for the Zr based alloy. The Zr based alloy could be any common Zr based alloy (i.e. alloy containing Zr) known by one of ordinary skill in the art. For example, the Zr based alloy may be Zr-Al-Cu-Ni alloy, i.e. an alloy containing Zr, Al, Cu and Ni.

In some embodiments, a binding force between the ceramic substrate and the metallic composite is greater than 50 MPa.

The ceramic substrate includes zirconium oxide. Then the combination between the Zr based alloy-A composite and the ceramic substrate may be better, and performances, such as tenacity, of the metal-ceramic composite may be further improved.

In some embodiments, the groove has a depth of greater than 0.1 millimeters.

According to embodiments of a second aspect of the present disclosure, a method of preparing a metal-ceramic composite is provided. The method includes steps of: providing a ceramic substrate having a groove formed in a surface of the ceramic surface; filling a component A into the groove, wherein component A includes at least one selected from a group consisting of W, Mo, Ni, Cr, stainless steel, WC, TiC, SiC, ZrC and ZrO₂; forming a reinforced phase matrix having a plurality of pores therein and dispersed in the groove by sintering the ceramic substrate filled with component A, wherein the reinforced phase matrix has a porosity of 70% to 30%; and filling a liquid melt of a Zr based alloy into the pores of the reinforced phase matrix thereby forming the metal-ceramic composite. Based on the total volume of the formed metal-ceramic composite, the content of A is 30% to 70% by volume.

In some embodiments, the filling step may include first filling A into the groove, and second filling the Zr based alloy into the groove.

There are no particular limits for the first filling step, a conventional filling method may be used in the present disclosure. In an embodiment, the first filling step may be performed by the following steps. At first, materials of A are dissolved in a solvent so as to form a slurry containing A. Then the slurry is filled in the groove of the ceramic substrate. The solvent may be organic solvent whose function and type are well known to those having ordinary skill in the art. In an embodiment, the organic solvent is methyl silicone oil. The methyl silicone oil may act as a carrier for the A, which is easy to remove during the following sintering process. In addition, the formation of pores in the reinforced phase matrix may be facilitated. The slurry may also contain a modifying additive, such as a powder surfactant. In an embodiment, the modifying agent is a silane coupling agent 9116.

The method further includes forming a reinforced phase matrix having a plurality of pores in the reinforce phase matrix and dispersed in the groove by sintering the ceramic substrate filled with component A prior to the second filling step.

There are no particular limits for the shape and structure of the ceramic substrate, and the ceramic substrate may be selected according to practical requirement.

In some embodiments of the present disclosure, the groove forms a predetermined pattern on the surface of the ceramic substrate. There are no particular limits for the pattern, which may be predetermined according to practical requirement. For example, the pattern may be a three-dimensional mark, a metal block which occupies a part of the surface of the ceramic substrate or a texture pattern. The ceramic substrate having grooves may be commercially available or self-prepared. The groove may be formed in the surface of the ceramic substrate when preparing the ceramic substrate.

For example, when pre-molding the ceramic substrate, the groove is formed in the surface of the ceramic substrate by pre-molding and sintering. Specifically, a protrusion part corresponding to the groove is formed in a mould, then materials of the ceramic may be molded in the mould by injection molding or hot pressing, and the molded ceramic is dumped and sintered. In this way, the ceramic substrate having the predetermined groove may be obtained.

There are no particular limitations for methods of preparing the ceramic substrate, and the methods for manufacturing the ceramic substrate may be any common methods known by one of ordinary skill in the art. For example, a method for preparing the ceramic substrate includes the following steps: a defined amount of raw material is provided at first, and the raw material includes ceramic powders, binder and surfactant; then a green ceramic body is formed by subjecting the raw material to a molding process, like dry pressing, extruding, injection molding or hot pressing; and then the green ceramic body is subjected to dumping and sintering. The equipment and the molding process are well known by one of ordinary skills in the art, which may be selected according to practical requirement. Based on the types and amounts of the ceramic powders, binder and surfactant, the other preparing conditions and parameters may be adjusted accordingly.

In an embodiment, the groove may be formed in the surface of the ceramic substrate after the ceramic substrate is formed already. For example, the groove may be formed by laser. Specifically, the ceramic substrate may be formed with the following steps: a green ceramic body is firstly formed via injection molding or hot pressing, and then the green ceramic body is dumped and sintered in order to obtain a initial substrate having a desired shape, finally a predetermined area of the surface of the initial substrate is irradiated by a laser, by means of which the groove is formed. The laser may have a power of about 10 W to about 20 W.

The reinforced phase matrix has a porosity of 70% to 30%. The pore may be in the form of an open hole in the reinforced phase matrix, so that the Zr based alloy is filled in the pores. The porosity may be tested by a commonly drainage method.

With the sintering step, particles of A may be bonded together to form a reinforced phase matrix having a plurality of open pores. The melt of the Zr based alloy may infiltrate into the plurality of pores to form the metallic composite.

In some embodiments, the sintering step is carried out for about 1 hour to about 2 hours. Then a compactness and strength of the metal-ceramic composite may be further improved. There are no particular limitations for the method of sintering step, for example, the sintering step may be carried out in a sintering furnace, and the sintering step may include a pre-sintering of several temperature increasing steps.

In some embodiments, the sintering step is carried out at a temperature of 1000 Celsius degrees to 1200 Celsius degrees.

In some embodiments, the sintering step is carried out under vacuum or in the presence of an inert gas. The inert gas may be nitrogen or argon.

The second filling step includes filling a liquid melt of the Zr based alloy into the pores of the reinforced phase matrix.

In some embodiments, the filling of the liquid melt is carried out by infiltration.

In some embodiments, the infiltration may be performed by pressure infiltration or under vacuum. The pressure infiltration is well known to those having ordinary skill in the art, thus details related to the pressure infiltration are omitted herein. In an embodiment, the infiltration is performed under vacuum and at a temperature higher than a melting point T of the Zr based alloy. Then the prepared metal-ceramic composite may have fewer air pores, or even have no air pore.

In some embodiments, the infiltration is performed under a vacuum degree of no less than 9×10⁻³ Pa and at a temperature of T+50 Celsius degrees to T+100 Celsius degrees.

In some embodiments, the infiltration is performed for no less than 5 minutes. Then the Zr based alloy may be contacted/reacted with the ceramic substrate completely, and the binding strength between the metallic composite and the ceramic substrate may be further improved. In an embodiment, the infiltration may be performed for a time ranging from 5 min to 30 min. The melt of the Zr based alloy may infiltrate into the pores of the reinforced phase matrix more completely via a capillary action.

In some embodiments, the method further includes at least one step selected from a group consisting of cooling, grinding, polishing and abrasive blasting, after the filling step. With these steps, the prepared metal-ceramic composite may obtain better appearance.

In some embodiments, the cooling step is performed with a cooling rate of greater than 100 Celsius degrees per minute when a temperature of the metal-ceramic composite is higher than 700 Celsius degrees, and with a cooling rate of greater than 50 Celsius degree per minute when the temperature of the metal-ceramic composite is higher than 400 Celsius degrees.

In some embodiments, the method may include the following steps. Firstly, the Zr based ally is placed on the surface of the ceramic substrate in which the groove is formed. Then the temperature is increased to a temperature 50 Celsius degree to 100 Celsius degree higher than the melting point of the Zr based alloy under a vacuum degree of 9×10⁻³ Pa, and the temperature was kept for no less than 5 min, during which the Zr based alloy melted to form an alloy melt and infiltrate into the reinforced phase matrix. Then argon was charged to cool the alloy melt with a cooling speed of greater than 100 Celsius degrees per minute when the temperature of the alloy melt is greater than 700 Celsius degrees, and with a cooling speed of greater than 50 Celsius degrees per minute when the temperature of the alloy melt is greater than 400 Celsius degrees.

The present disclosure will be described in details with reference to the following examples.

### EXAMPLE 1

The present example provides a method for preparing a metal-ceramic composite product S1. The method includes the following steps.
1) 300 g W powders (having a particle diameter D50 of 1 micron) and 1.2 g silane coupling agent 9116 were dissolved in 25 g methyl silicone oil to form a first mixture, the first mixture was stirred for 2 hours to obtain a second mixture. Then the second mixture was defoamed in a vacuum drier for 30 minutes to obtain a slurry containing W. And then the slurry was coated in a groove formed in a surface of a zirconia ceramic substrate until the groove was filled with the slurry, and the groove was formed during a pre-molding process of the zirconia ceramic substrate and the groove had a depth of 0.20 millimeters and a width of 0.5 millimeters. Then said zirconia ceramic substrate was defoamed in the vacuum drier for 30 minutes. After that said zirconia ceramic substrate was sintered in a vacuum resistance furnace at a temperature of 600 Celsius degrees which was reached with a temperature increasing rate of 2 Celsius degrees per minute, and then said zirconia ceramic substrate was kept at 600 Celsius degrees for 1 hour. Then the temperature was increased to 1100 Celsius degrees with a temperature increasing rate of 10 Celsius degrees per minute, and said zirconia ceramic substrate was kept at 1100 Celsius degrees for 1 hour. Then a reinforced phase matrix was formed. The reinforced phase matrix was tested with a drainage method, and the results shown that the reinforced phase matrix had a porosity of 62.8%.
2) A Zr-Al-Cu-Ni alloy (alloy containing Zr, Al, Cu and Ni) was placed above the groove of the zirconia ceramic substrate obtained from the step 1), and then the Zr-Al-Cu-Ni alloy and said zirconia ceramic substrate were subjected to an infiltration process for 5 min in a melt infiltration furnace under a vacuum degree of 8×10⁻³ Pa at a temperature of 950 Celsius degrees, during which the Zr-Al-Cu-Ni alloy was melted and then filled into the reinforced phase matrix and a metal-ceramic composite was formed. Then Ar was charged into the melt infiltration furnace to cool the metal-ceramic composite with a cooling rate of 120 Celsius degrees per minute, until room temperature was reached. Then the cooled metal-ceramic composite was subjected to a grinding, polishing and sand blasting obtain the metal-ceramic composite product S1.

### EXAMPLES 2-4

These examples provide methods for preparing metal-ceramic composite products S2-4.

These methods include substantially the same steps as Example 1 except the differences shown in Table 1.

**Table 1**

| | Groove | | Reinforced phase matrix | | | Zr based alloy | | | metal-cera mic composite |
|---|---|---|---|---|---|---|---|---|---|
| | Preparing Type | Depth (mm) | A | Sintering Temp. | Porosit y | comp ositio n | Infiltration Temp. | Infiltration Time | A:Zr based alloy (v:v) |
| EXAM PLE 1 | During pre-molding of the ceramic substrate | 0.20 | w | 1100°C | 62.8% | Zr-Al-Cu-Ni | 950°C | 5 min | 37.2:62.8 |
| EXAM PLE 2 | By laser after forming the ceramic substrate | 0.15 | Mo | 1000°C | 52% | Zr-Al-Cu-Ni | 950°C | 5 min | 48:52 |
| EXAM PLE 3 | By laser after forming the ceramic substrate | 0.30 | WC | 1200°C | 50% | Zr-Al-Cu-Ni | 1100°C | 20 min | 50:50 |
| EXAM PLE 4 | During pre-molding of the ceramic substrate | 0.11 | Mo and WC | 1100°C | 51% | Zr-Al-Cu-Ni | 1000°C | 10 min | 49:51 |

### COMPARATIVE EXAMPLE 1

The present comparative example provides a method for preparing a metal-ceramic composite product DS1. The method includes the following steps.

A groove having a depth of 0.15 millimeters and a width of 0.5 millimeters was formed in a surface of a zirconia ceramic substrate by laser. A Zr-Al-Cu-Ni alloy was placed above the groove and then the Zr-Al-Cu-Ni alloy and the zirconia ceramic substrate were subjected to an infiltration process in a melt infiltration furnace for 10 min under a vacuum degree of 9×10⁻³ Pa at a temperature of 1000 Celsius degrees, during which the Zr-Al-Cu-Ni alloy was melted and filled into the groove until the groove was filled with Zr-Al-Cu-Ni alloy. Then a metal-ceramic composite was obtained. After that, Ar was charged into the melt infiltration furnace to cool the metal-ceramic composite with a cooling rate of 120 Celsius degrees per minute, until the room temperature was obtained. Then said metal-ceramic composite was subjected to grinding, polishing and sand blasting to obtain the metal-ceramic composite product DS1.

### Performance test

### 1) Binding force

Slurry of A was injected into a ceramic ring made of zirconia and having an inner diameter of 11 mm and a height of 10 mm and said ceramic ring was sintered. And then a Zr based alloy was infiltrated into the, while the infiltration process was done as described in Example 1. Thus a metal-ceramic composite sample was formed, in which the metallic composite was disposed in the interior of the ceramic ring. Then the sample was tested in a universal tester, and a pressure under which the metallic composite was pressed out of the ceramic ring was recorded. The shear force was calculated based on the pressure and was recorded as the binding force between the metallic composite and the ceramic substrate. The testing results were shown in Table 2.

### 2) Hardness

The products S1-4 and DS1 were subjected to grinding and polishing to form a mirror surface, then these products were tested with a HVS-10Z digital display Vickers hardness tester. For each product, 10 test points were tested. The hardness of each product was recorded as an average value of the hardnesses tested in the 10 test points. The results were shown in Table 2.

### 3) Appearance

The products S1-4 and DS1 was observed with an optical microscope having an magnification value of 50. The appearance factors, such as obvious groove, protrusion, gloss and uniformity, were recorded. The test results were shown in Table 2.

**Table 2**

| Sample | Binding force (MPa) | Hardness (Hv) | Appearance |
|---|---|---|---|
| S1 | 55 | 660 | Uniform gloss, no obvious dark spot |
| S2 | 60 | 630 | Uniform gloss, no obvious dark spot |
| S3 | 63 | 700 | Uniform gloss, no obvious dark spot |
| S4 | 51 | 680 | Uniform gloss, no obvious dark spot |
| | Binding force (MPa) | Hardness | Appearance |
| DS1 | 51 | 430 | Uniform gloss; a lot of dark spots; plenty of concaves |

According to embodiments of the present disclosure, the binding force between the metal containing part (i.e. the metallic composite) and the ceramic containing part (i.e. the ceramic substrate) of the metal-ceramic composite may be improved. Further, seamless connection may be achieved between the metallic composite and the ceramic substrate. Then the metal-ceramic composite may have improved hardness, corrosion resistance and wear resistance. In addition, the metal-ceramic composite prepared according to embodiments of the present disclosure may obtain aesthetic appearance, because very few or even no air pores (or holes) or bulky parts are contained in the metal-ceramic composite. Therefore, the metal-ceramic composite may be suitable for manufacturing exterior decorating parts, which are capable to realize effects of complete mirror surface, ceramic mirror surface and matte metal surface.

## Claims

1. A method of preparing a ceramic substrate having a groove formed in a surface, the groove being filled with a metal-ceramic composite, the method comprising the steps of:
providing a ceramic substrate having a groove formed in a surface thereof, wherein the ceramic substrate includes zirconium oxide,
filling a component A into the groove, wherein component A includes at least one selected from a group consisting of W, Mo, Ni, Cr, stainless steel, WC, TiC, SiC, ZrC and ZrO₂,
forming a reinforced phase matrix having a plurality of pores therein and dispersed in the groove by sintering the ceramic substrate filled with component A, wherein the reinforced phase matrix has a porosity of 70% to 30%; and
filling a liquid melt of a Zr based alloy into the pores of the reinforced phase matrix thereby forming the metal-ceramic composite, wherein
based on the total volume of the formed metal-ceramic composite, the content of component A is 30% to 70% by volume.

2. The method of claim 1, wherein the sintering step is carried out (i) at a temperature of 1000 Celsius degrees to 1200 Celsius degrees, (ii) under vacuum or in the presence of an inert gas and/or (iii) for 1 hour to 2 hours.

3. The method of claim 1, wherein the filling of the liquid melt is carried out by infiltration.

4. The method of claim 3, wherein the infiltration is performed for no less than 5 minutes.

5. The method of claim 3 or 4, wherein the infiltration is performed under vacuum and at a temperature higher than a melting point T of the Zr based alloy, wherein the infiltration is performed under a vacuum degree of no less than 9×10⁻³ Pa and at a temperature of T+50 Celsius degrees to T+100 Celsius degrees.

6. The method of any of the preceding claims, further comprising the step of cooling after the filling step, wherein the cooling step is performed with a cooling rate of greater than 100 Celsius degrees per minute when a temperature of the metal-ceramic composite is higher than 700 Celsius degrees, and with a cooling rate of greater than 50 Celsius degree per minute when the temperature of the metal-ceramic composite is higher than 400 Celsius degrees.

7. The method of any of the preceding claims, wherein component A is provided in the form of particles, and the particles have a particle diameter of 0.1 microns to 100 microns.

8. The method of any of the preceding claims, wherein the groove has a depth of greater than 0.1 millimeters.

9. A metal-ceramic composite produced by the method according any of the claims 1-8 wherein the metal-ceramic composite comprises:
- a ceramic substrate having a groove formed in a surface thereof, wherein the ceramic substrate includes zirconium oxide,
- a metal composite filled in the groove, wherein the metal composite includes
- a component A including at least one selected from a group consisting of W,Mo, Ni,Cr stainless steel, WC,TiC, SiC ZrC and ZrO₂;
- and further includes Zr based alloy, wherein the content of the component A is 30% to 70 % by volume based on the total volume of the the metal composite.

## Patentansprüche

1. Verfahren zum Herstellen eines Keramiksubstrats, das eine Nut aufweist, die in einer Fläche gebildet ist, wobei die Nut mit einem Metall-Keramik-Verbundstoff gefüllt wird, wobei das Verfahren die Schritte umfasst:
Bereitstellen eines Keramiksubstrats, das eine Nut aufweist, die in einer Fläche davon gebildet ist, wobei das Keramiksubstrat Zirkoniumdioxid beinhaltet, Füllen einer Komponente A in die Nut, wobei Komponente A mindestens eines, das aus einer Gruppe ausgewählt wird, die aus W, Mo, Ni, Cr, rostfreiem Stahl, WC, TiC, SiC, ZrC und ZrO₂ besteht, beinhaltet,
Bilden einer verstärkten Phasenmatrix, die mehrere Poren darin und in der Nut verteilt aufweist, durch Sintern des Keramiksubstrats, das mit Komponente A gefüllt ist, wobei die verstärkte Phasenmatrix eine Porosität von 70 % bis 30 % aufweist; und
Füllen einer flüssigen Schmelze einer Zr-basierten Legierung in die Poren der verstärkten Phasenmatrix, wodurch der Metall-Keramik-Verbundstoff gebildet wird, wobei
basiert auf dem Gesamtvolumen des gebildeten Metall-Keramik-Verbundstoffs der Gehalt an Komponente A 30 Volumen-% bis 70 Volumen-% beträgt.

2. Verfahren nach Anspruch 1, wobei der Sinterschritt (i) bei einer Temperatur von 1.000 Celsiusgraden bis 1.200 Celsiusgraden, (ii) unter Vakuum oder in Gegenwart eines Inertgases und/oder (iii) für 1 Stunde oder 2 Stunden durchgeführt wird.

3. Verfahren nach Anspruch 1, wobei das Füllen der flüssigen Schmelze durch Infiltration durchgeführt wird.

4. Verfahren nach Anspruch 3, wobei die Infiltration für nicht weniger als 5 Minuten vollzogen wird.

5. Verfahren nach Anspruch 3 oder 4, wobei die Infiltration unter Vakuum und bei einer Temperatur von höher als einem Schmelzpunkt T der Zr-basierten Legierung vollzogen wird, wobei die Infiltration unter einem Vakuumgrad von nicht weniger als 9 x 10⁻³ Pa und bei einer Temperatur von T + 50 Celsiusgraden bis T + 100 Celsiusgraden vollzogen wird.

6. Verfahren nach einem der vorhergehenden Ansprüche, ferner umfassend den Schritt des Kühlens nach dem Füllschritt, wobei der Kühlschritt mit einer Abkühlgeschwindigkeit von größer als 100 Celsiusgraden pro Minute vollzogen wird, wenn eine Temperatur des Metall-Keramik-Verbundstoffs höher als 700 Celsiusgrade ist, und mit einer Abkühlgeschwindigkeit von größer als 50 Celsiusgraden pro Minute vollzogen wird, wenn die Temperatur des Metall-Keramik-Verbundstoffs höher als 400 Celsiusgrade ist.

7. Verfahren nach einem der vorhergehenden Ansprüche, wobei Komponente A in Form von Teilchen bereitgestellt wird und die Teilchen einen Teilchendurchmesser von 0,1 Mikrometer bis 100 Mikrometer aufweisen.

8. Verfahren nach einem der vorhergehenden Ansprüche, wobei die Nut eine Tiefe von größer als 0,1 Millimeter aufweist.

9. Metall-Keramik-Verbundstoff, hergestellt durch das Verfahren nach einem von Anspruch 1 bis 8, wobei der Metall-Keramik-Verbundstoff umfasst:
- ein Keramiksubstrat, das eine Nut aufweist, die in einer Fläche davon gebildet ist, wobei das Keramiksubstrat Zirkoniumdioxid beinhaltet:
- einen Metallverbundstoff, der in die Nut eingefüllt ist, wobei der Metallverbundstoff beinhaltet:
- eine Komponente A, die mindestens eines, ausgewählt aus einer Gruppe, die aus W, Mo, Ni, Cr, rostfreiem Stahl, WC, TiC, SiC, ZrC und ZrO₂ besteht, beinhaltet;
- und ferner Zr-basierte Legierung beinhaltet, wobei der Gehalt der Komponente A basiert auf dem Gesamtvolumen des Metallverbundstoffs 30 Volumen-% bis 70 Volumen-% beträgt.

## Revendications

1. Procédé de préparation d'un substrat en céramique ayant un sillon formé dans une surface, le sillon étant rempli avec un composite métal-céramique, le procédé comprenant les étapes de :
fourniture d'un substrat en céramique ayant un sillon formé dans une de ses surfaces, dans lequel le substrat en céramique comprend de l'oxyde de zirconium, remplissage d'un composant A dans le sillon, où le composant A comprend au moins un choisi dans le groupe constitué par W, Mo, Ni, Cr, l'acier inoxydable, WC, TiC, SiC, ZrC et ZrO₂,
formation d'une matrice de phase renforcée ayant une pluralité de pores à l'intérieur et dispersés dans le sillon par frittage du substrat en céramique rempli avec le composant A, où la matrice de phase renforcée a une porosité de 70 % à 30 % ; et remplissage d'un liquide fondu d'un alliage à base de Zr dans les pores de la matrice de phase renforcée formant ainsi le composite métal-céramique, où sur la base du volume total du composite métal-céramique formé, la teneur du composant A est de 30 % à 70 % en volume.

2. Procédé selon la revendication 1, dans lequel l'étape de frittage est réalisée (i) à une température de 1000 degrés Celsius à 1200 degrés Celsius, (ii) sous vide ou en présence d'un gaz inerte et/ou durant 1 heure à 2 heures.

3. Procédé selon la revendication 1, dans lequel le remplissage du liquide fondu est réalisé par infiltration.

4. Procédé selon la revendication 3, dans lequel l'infiltration est effectuée durant pas moins de 5 minutes.

5. Procédé selon la revendication 3 ou 4, dans lequel l'infiltration est effectuée sous vide et à une température supérieure à un point de fusion T de l'alliage à base de Zr, où l'infiltration est effectuée à un degré de vid de pas moins de 9 x 10⁻³ Pa et à une température de T + 50 degrés Celsius à T + 100 degré Celsius.

6. Procédé selon l'une quelconque des revendications précédentes, comprenant en outre l'étape de refroidissement après l'étape de remplissage, où l'étape de refroidissement est effectuée avec une vitesse de refroidissement de plus de 100 degrés Celsius par minute quand une température du composite métal-céramique est supérieure à 700 degrés Celsius, et avec une vitesse de refroidissement de plus de 50 degrés Celsius par minute quand la température du composite métal-céramique est supérieure à 400 degrés Celsius.

7. Procédé selon l'une quelconque des revendications précédentes, dans lequel le composant A est fourni sous forme de particules, et les particules ont un diamètre de particule de 0,1 micron à 100 microns.

8. Procédé selon l'une quelconque des revendications précédentes, dans lequel le sillon a une profondeur de plus de 0,1 millimètre.

9. Composite métal-céramique produit par le procédé selon l'une quelconque des revendications 1 à 8 dans lequel le composite métal-céramique comprend :
- un substrat en céramique ayant un sillon formé dans une de ses surfaces où le substrat en céramique comprend de l'oxyde de zirconium,
- un composite de métal rempli dans le sillon, où le composite de métal comprend
- un composant A comprenant au moins un choisi dans un groupe constitué par W, Mo, Ni, CR, l'acier inoxydable, WC, TiC, ZrC et ZrO₂ ;
- et comprend en outre un alliage à base de Zr, où la teneur du composant A est de 30 % à 70 % en volume sur la base du volume total du composite de métal.
